# EUROPEAN PATENT SPECIFICATION

(11) **EP 0 239 283 B1**
(45) Date of publication and mention of the grant of the patent: **02.03.1994**
(21) Application number: 87302074.7
(22) Date of filing: 11.03.1987
(51) Int. Cl.: G06F 15/78

(54) **Microcomputer**
Mikrorechner
Microcalculateur

(30) Priority: 26.03.1986 JP 65739/86
(43) Date of publication of application: 30.09.1987
(73) Proprietor: HITACHI, LTD., Chiyoda-ku, Tokyo 101 (JP)
(72) Inventor: Mitsuishi, Naoki, Kodaira-shi Tokyo (JP)
(74) Representative: Calderbank, Thomas Roger

(56) References cited:
- EP-A- 0 081 873
- FR-A- 2 401 459
- FR-A- 2 461 301
- GB-A- 2 079 996
- WESCOM 83, vol. 27, 1983, pages 34/2 (1-4); L.L. GOSS: "Single chip microcomputer with EEROM allows flexible system design"
- ELECTRONIC DESIGN, vol. 32, no. 25, December 1984, pages 201-209, Waseca, MN, US; F. GRUPPUSO et al.: "On-chip EEPROM holds changing register data for 8-bit microcomputer"

## Description

The present invention relates to a microcomputer with a built-in writable memory such as an Electrically Erasable and Programmable Read-Only Memory (EEP-ROM). The present invention may be applied to the production of a single chip microcomputer incorporated in an IC card.

FR-A-2461301 discloses a microprocessor comprising a central processing unit; a plurality of external terminals; an input/output circuit for transmitting data between the external terminals and the central processing unit; a random access memory defining a working region for the central processing unit; and an electrically programmable read-only memory divided into two memories, one memory is used to store a write control program which can be used to rewrite the application programs into the other memory. This document corresponds to the precharacterising part of claim 1 of this application.

FR-A-2401459 discloses a portable data carrier comprising a microprocessor connected to a programmable read only memory. The memory includes a first zone for which access by external data is forbidden, a second zone in which read out and write in for external and internal data is allowed and a third zone in which only reading is allowed.

"IC cards", which have been the subject of increasing attention in recent years, are cards which can be used instead of magnetic cards. For example, as disclosed in Japanese Patent Publication No. 19665 of 1981, an IC card may incorporate therein a P-ROM (UV erasable type programmable ROM) which stores data such as identification codes (ID) and can be used in place of a key, for example.

The inventor of the present invention investigated single chip type microcomputers with built-in EEP-ROMs which are suitable for assembly into IC cards of the kind described above. The following illustrates the technique investigated by the inventor of the present invention, though it is not well known in the art.

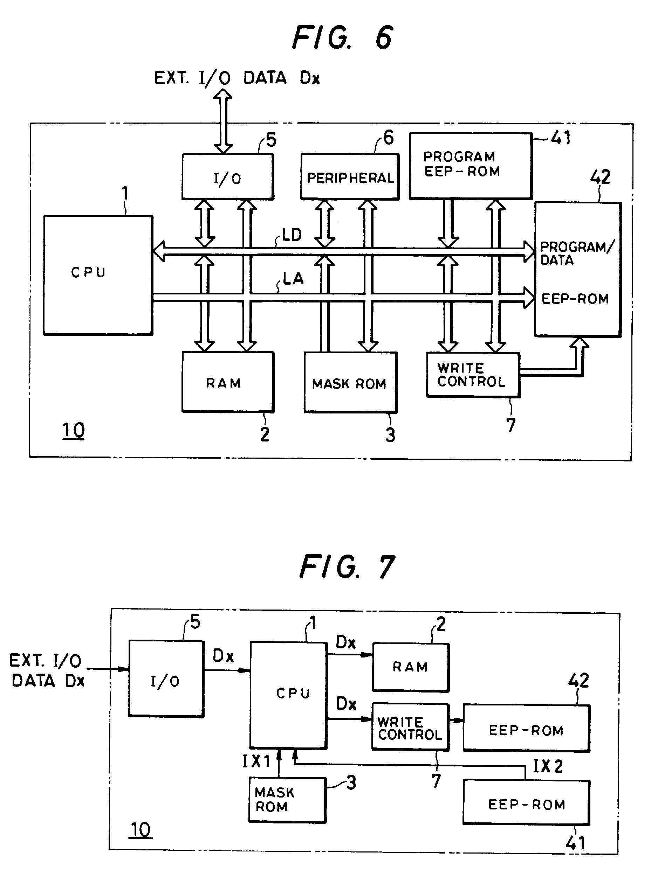

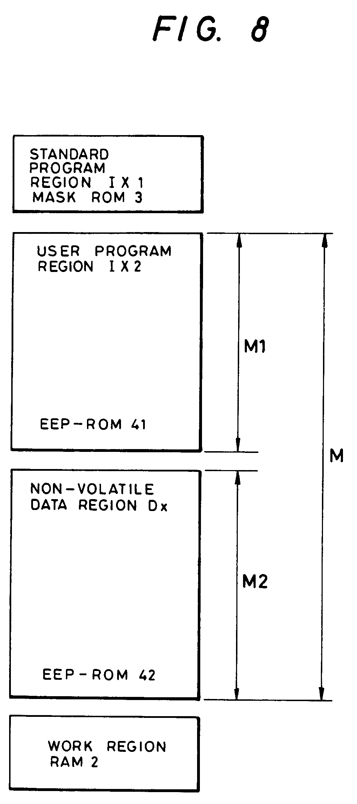

Fig. 6 of the accompanying drawings shows the construction of a microcomputer 10 investigated by the present inventor. The microcomputer shown in Fig. 6 is of a single chip type with a built-in EEP-ROM, and includes a central processing unit (CPU) 1, a random access memory (RAM) 2, a mask ROM (fixed memory ROM) 3, EEP-ROMs 41,42, an input/output unit (I/O) 5, a peripheral circuit 6 and an EEP-ROM write control unit 7 inside the same semiconductor chip. Each unit (1 to 7) is connected to the other by an address bus LA and a data bus LD. This single chip type microcomputer 10 is incorporated in an IC card.

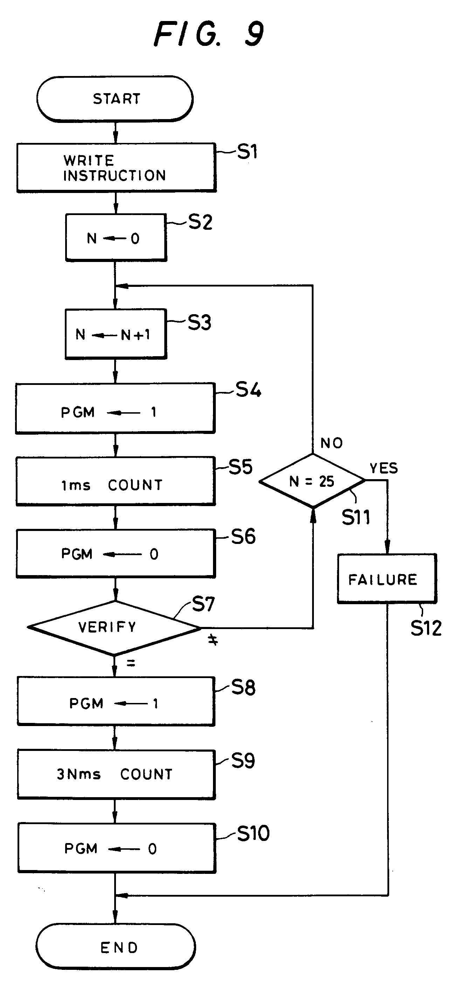

All the exchange of data Dx to and from the outside of the microcomputer occurs through the CPU 1. Fig. 7 of the accompanying drawings shows the flow of data Dx in the microcomputer 10 shown in Fig. 6. This microcomputer may be such that, unless a "key" by a suitable software is used, the built-in software cannot be known.

Here, EEP-ROMs 41 and 42 are equivalent to, and independent of, each other. One (41) of the EEP-ROMs 41,42 is used as a so-called "user program region" (M1) as shown in Fig. 8 of the accompanying drawings, into which a program prepared arbitrarily by the user can be written in advance. The write operation of this program occurs when an external control signal stops CPU 1 and data is written directly into the EEP-ROM 41. The method of programming such as PROM is known in the art from, for example, "Hitachi Microcomputer Data Book, 8-bit Single Chip", pp. 823-865, published in August, 1984 by Hitachi, Ltd. This eliminates the necessity for rewriting the mask ROM in the production process and can cope instantly with diverse applications required by users. Furthermore, if a suitable means is provided which inhibits re-write or read to and from this EEP-ROM 41 after programming, the built-in software can be protected effectively. The other EEP-ROM 42 is used as a data region (M2). In this region those data Dx which must be preserved, from amongst the input/output data managed by CPU 1, are written instantaneously whenever necessary. The write operation to this EEP-ROM 42 occurs through a write control circuit 7 which is controlled by the CPU 1. Generally, the time necessary for the write operation to the EEP-ROM 42 is about 1,000 times the mean instruction execution time of the CPU. During this write period, the EEP-ROM 42 is electrically cut off from the CPU 1 and write and read operations to and from the EEP-ROM 42 are not both possible.

On the other hand, the CPU 1 reads, instruction by instruction, a user program Ix2 stored in the program storage EEP-ROM 41 and executes a predetermined processing operation. When it becomes necessary during this processing to write the preservation data Dx into the data storage EEP-ROM 42, the write operation to this EEP-ROM 42 is made through the EEP-ROM write control unit 7. Reference is made, whenever necessary, to a program routine (or a program module) prepared in advance as a standard program Ix1 in the mask ROM 3. For instance, the program routine may be a software timer or a division program and various useful programs are prepared in accordance with the intended applications of the microcomputer. Generally, mask ROMs can be fabricated within a smaller area than EEP-ROMs having the same capacity. Therefore, the overall size of the semiconductor chip can be reduced by utilizing the ROM 3 instead of storing all the programs in EEP-ROM 41.

However, the overall processing is conducted in accordance with the upper program written into the EEP-ROM 41.

The EEP-ROM write control unit 7 shown in Fig. 7 carries out the write operation to the other EEP-ROM 42 whilst it is controlled by the program written into one (41) of EEP-ROMs, for example. The other EEP-ROM 42 is cut off from the CPU 1 while the write operation is being carried out.

In the manner described above, it is possible to form a microcomputer 10 which can immediately meet with many diverse requirements from the user and can keep semi-permanently the data Dx in EEP-ROM, whenever necessary.

However, the inventor of the present invention clarified that the technique described above involves the following problem.

As can be seen, the microcomputer 10 described above needs two mutually independent EEP-ROMs 41 and 42 in order to write the user program Ix2 and to store the data Dx to be preserved. If only one EEP-ROM is used, read access to the EEP-ROM cannot be made while the write operation is made to it, and the instruction to be executed by CPU 1 cannot be read out. Therefore, the program and the data are stored in mutually independent EEP-ROMs 41 and 42 and while the instruction is being read out from one 41 of the EEP-ROMs, the write control to the other 42 is made on the basis of the instruction read out from the former.

Since the two, mutually independent, EEP-ROMs 41, 42 must be used for the reason described above and moreover, in order to satisfy the diverse requirements when the microcomputer is used, sufficiently large memory regions M1 and M2 must be provided in the EEP-ROMs 41,42. For instance, both EEP-ROMs 41 and 42 must have, a large memory capacity to satisfy, for example alternative requirements for a large program size, though the data size may be small, and requirements for a large data size, though the program size may be small. Furthermore, even if both EEP-ROMs 41,42 have a large memory capacity, the memory capacity may not always be used fully and hence waste is likely to occur.

Furthermore, each of the EEP-ROMs 41,42 has peripheral circuits for data input/output, such as a sense amplifier and a driver circuit, and another peripheral circuit consisting of an address selection circuit together with its memory array. Therefore, if a plurality of EEP-ROMs are formed independently of one another, these peripheral circuits must be provided inside the respective EEP-ROMs and hence a great number of circuit elements become necessary and this increases the overall size of each EEP-ROM.

Accordingly, the inventor of the present invention investigated the possibility of storing in EEP-ROM 41 the control program for EEP-ROM 42 and the data to be referred to by the program of EEP-ROM 42, and the possibility of storing in EEP-ROM 42 the control program for EEP-ROM 41 and the data to be referred to by the program of EEP-ROM 41. If this can be done, the program storage area and the data storage area in each of EEP-ROMs 41,42 become variable. In this case, the problem of the memory area or size can be somewhat mitigated. Even in this case, however, each EEP-ROM 41,42 must have independent peripheral circuits, and thus the disadvantage due to the overall size of EEP-ROM, and hence to the overall size of the semiconductor chip, remains unsolved.

The inventor of this invention considered for the first time that although the microcomputer described above has the advantage that it can immediately satisfy the diverse requirements for use and can semi-permanently preserve the necessary data Dx, it must have two independent EEP-ROMs 41,42 having a sufficiently large memory capacity. Therefore, the load to the hardware construction is so great that the size of the semiconductor chip, particularly in the single chip type, becomes unavoidably great and the efficiency of utilization of the hardware resources is not very high. Reduction of the size of semiconductor chip is a requisite of particular importance when the microcomputer is incorporated in an IC card, in order to improve the card strength and the semiconductor chip described above fails to satisfy this requirement.

Therefore, the present invention seeks to permit a reduction in the size of the hardware and to permit an improvement in the efficiency of utilization of the hardware resources, whilst keeping the advantages of the microcomputer described above, i.e. to satisfy diversified requirements for use and to preserve semi-permanently the data Dx in EEP-ROM, whenever necessary.

Thus, in accordance with the present invention, the single-chip microcomputer comprises:
a central processing unit (CPU);
one or more external terminals (EXT I/O);
an input/output circuit for transmitting data between the external terminals (EXT I/O) and the central processing unit;
a random access memory defining a working region for the central processing unit;
an electrically programmable read-only memory (EPROM) storing both a user program and data independent of the user program;
a Mask ROM further memory for storing a write control program; and
a write control means controlled by the central processing unit on the basis of the write control program.

In the microcomputer of the present invention, the address positions of the electrically programmable read-only memory and the further memory in the address space of the control processing unit are mutually different; and
the microcomputer has:
a) a first operating state in which at least the user program received at the external terminal(s) is storable in and/or retrievable from the electrically programmable read-only memory, said user program passing directly from the central processing unit to the electrically programmable read-only memory;
b) a second operating state in which the user program in the electrically programmable read-only memory is operable to cause the central processing unit to generate new data; and
c) a third operating state in which that new data is stored in the electrically programmable read-only memory by the write control means under control of the write control program in the further memory, the central processing unit being isolated from the electrically programmable read-only memory in the third operating state.

Thus, with this invention, a central processing unit (CPU) of the microcomputer may jump to the further memory only when data are written into the writable memory (e.g. an electrically writable ROM) and to execute a predetermined write control program stored therein in advance, so that the CPU can execute a predetermined write control processing during the write operation to the writable memory too. Accordingly, the user program region and the data region may be in a single electrically writable ROM and the proportion of the size of each region can be selected arbitrarily. For this reason, the scale of the hardware construction can be reduced and the efficiency of utilization of the hardware resources can be improved while keeping the advantages that various requirements of use can be satisfied and data Dx can be preserved semi-permanently in the ROM, whenever necessary.

An IC card including the above single-chip microcomputer, and a method of operating the microcomputer, are also claimed.

Embodiments of the invention will now be described in detail, by way of example, with reference to the accompanying drawings, in which:
Fig. 1 is a block diagram showing principal parts of a microcomputer with a built-in EEP-ROM, being a first embodiment of the present invention;
Fig. 2 is a block diagram showing an example of the overall construction of the microcomputer shown in Fig. 1;
Fig. 3 is a block diagram showing the flow of data in the microcomputer shown in Fig. 2;
Fig. 4 is an address map showing three conditions of the address space of the CPU in the microcomputer shown in Fig. 2;
Fig. 5 is a flowchart showing an example of the operation of the microcomputer shown in Fig. 2;
Fig. 6 is a block diagram showing the construction of a microcomputer with a built-in EEP-ROM that was investigated before completion of the present invention; and has already been discussed;
Fig. 7 is a block diagram showing the flow of data in the microcomputer shown in Fig. 6;
Fig. 8 is an address map showing the conditions of the address space of CPU in the microcomputer shown in Fig. 6; and
Fig. 9 is a flowchart showing a further write control program when the EEP-ROM is incorporated in a microcomputer according to a second embodiment of the present invention.

In the drawings, the same reference numerals will be used throughout to identify the same or corresponding elements.

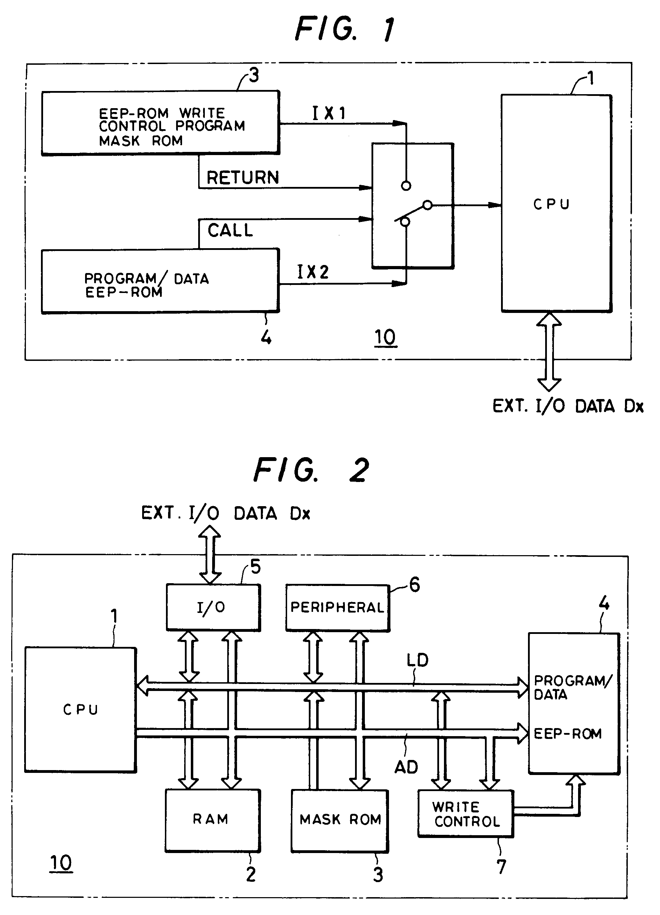

A microcomputer 10, whose principal parts are shown in Fig. 1, is of a single chip type and includes a CPU 1 and an EEP-ROM 4 into which both a user program Ix2 and data to be preserved (preservation data) are written in arbitrary proportions. The microcomputer 10 also includes a mask ROM 3 which fixedly stores in advance a write control program for writing data into the EEP-ROM 4 as part of a standard program Ix1.

The mask ROM 3 may store only the write control program or may also store a standard program routine as discussed above. Here, the write control program includes, for example, a program for invoking the write control circuit 7 or a program for detecting completion of the write operation. If the amount of data to be written is great, the data prepared in a predetermined region in a RAM (not shown in Fig. 1) may be transferred sequentially to the EEP-ROM 4 in order to complete the writing operation.

The addresses of the EEP-ROM 4 and the mask ROM 3 are at mutually different address positions in the address space of CPU 1.

The switch shown in Fig. 1 is imaginary and is used to indicate that the execution program of the CPU 1 is transferred to the mask ROM 3 by a call instruction at the time of the write operation and returns to the EEP-ROM 4 by a suitable return instruction after completion of the write operation.

In this case, the call instruction to a specific routine in the mask ROM 3 can be written into the EEP-ROM 4 in place of the write control program to the EEP-ROM 4. On the other hand, a return instruction to the EEP-ROM 4 can be written into the mask ROM 3 at the end of the write control program together with the write control program for the EEP-ROM 4.

Fig. 2 shows one arrangement of the overall construction of the microcomputer 10 shown in Fig. 1.

As shown in Fig. 2, the microcomputer 10 incorporates therein a RAM 2 providing the work region of the CPU 1, an input/output (I/O) unit 5 for the exchange of data Dx to and from the outside of the microcomputer, a peripheral circuit 6 and the EEP-ROM write control unit 7 in addition to the constituent elements described above, that is the CPU 1, the mask ROM 3 and the EEP-ROM 4. Since the microcomputer includes these constituent elements, it may provide a single chip type microcomputer to be incorporated in the IC card, for example. These units (1 to 7) of the microcomputer 10 are connected to one another through an address bus LA and a data bus LD.

Control signals for the memories and peripheral circuits are omitted from the figures.

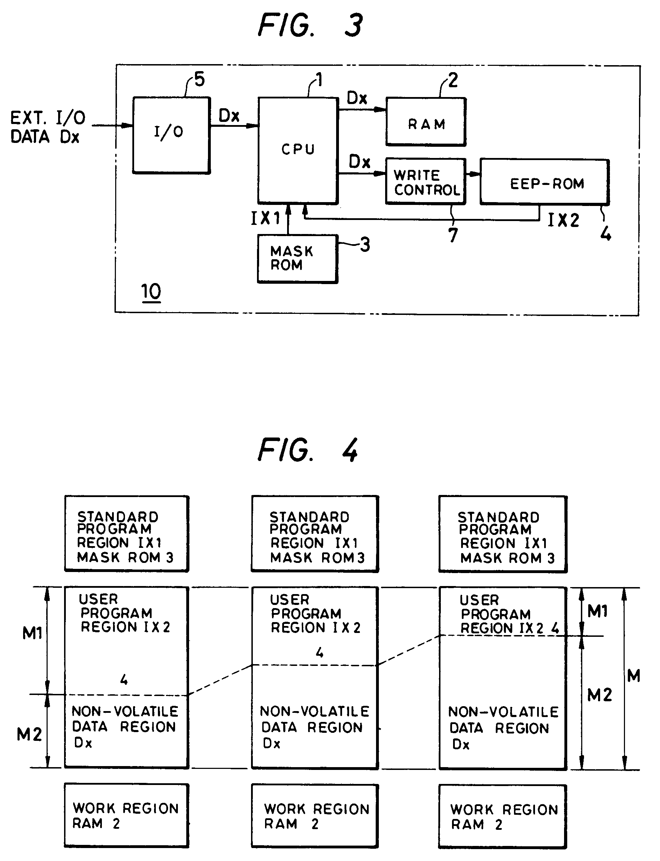

Fig. 3 shows the flow of data Dx in the microcomputer shown in Fig. 2. As shown in the figure, all the exchange of data Dx to and from the outside of the microcomputer occurs through the CPU 1. Therefore, the built-in software cannot be known unless a "key" formed by suitable software is used.

Fig. 4 shows three examples of memory maps of the address spaces inside the CPU 1 described above. As shown in Fig. 4, both the user program region M1 and the data region M2 are allotted in suitable proportions to the memory region M of the EEP-ROM 4.

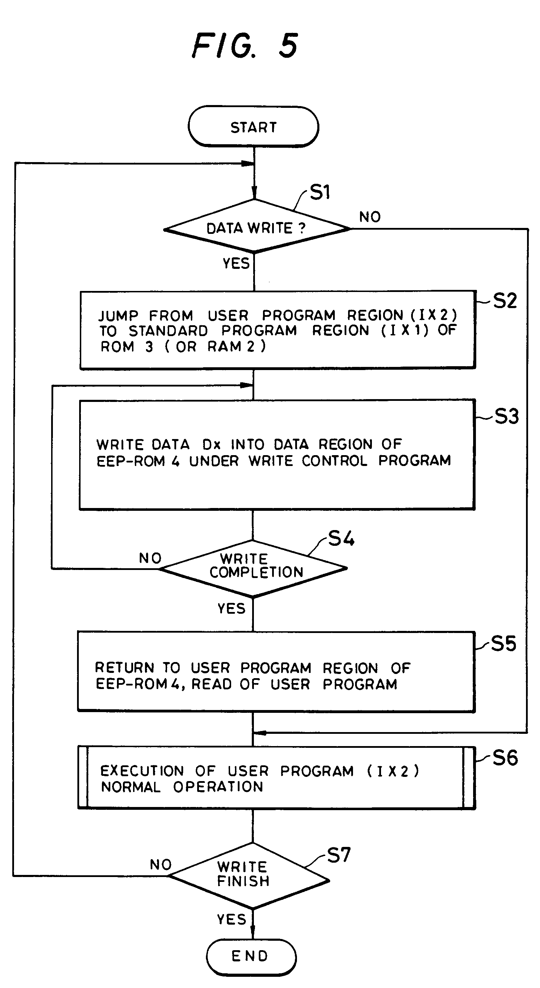

Fig. 5 shows a flowchart of an example of the processing operation when the write control for the EEP-ROM 4 is made by the CPU 1.

In Fig. 2, the CPU 1 reads, instruction by instruction, the program Ix2 written into the user program region M1 and executes a predetermined processing operation (step S6).

If it becomes necessary to write the preservation data Dx into the EEP-ROM 4 during this process (step 1), the CPU 1 jumps to the leading address of the write control program in the standard program region IX1 stored in the mask ROM 3 (step S2). The, the CPU 1 executes write control processing of the EEP-ROM 4 in accordance with the write control program (step S3). Hence, the write operation to EEP-ROM 4 is conducted through the EEP-ROM write control unit 7. While this write operation occurs, the EEP-ROM 4 is electrically cut off from CPU 1.

The CPU 1 judges the completion of the write operation on the basis of a flag generated from the write control unit 7 or an interrupt request (step 4). When the write operation is completed, the CPU 1 returns from the mask ROM 3 to the program region M1 of the EEP-ROM 4 and re- starts the read operation of the user program from the address next to the address at the time of jump (step S5). The CPU 1 continues execution of the user program until the processing is complete or until the next data write request occurs (step S6).

As described above, the user program region M1 and the data region M2 may be in a single EEP-ROM 4. Also, since the sizes of both regions M1 and M2 can be selected in arbitrary proportions, the memory region M can be interchanged and used efficiently between the user program, region M1 and the data region M2 by, for example, increasing the size of the program region M1 instead of reducing the size of the data region M2 or vice versa as can be seen from the three examples shown in Fig. 4, even if the size of the memory region M of EEP-ROM as a whole is not very large.

Accordingly, the present invention permits a reduction in the amount of hardware and the utilization efficiency of the hardware resources can be improved while keeping the advantages that the various requirements of users can be immediately satisfied and the data Dx can be preserved semi-permanently in EEP-ROM 4, whenever necessary.

The return to the user program upon completion of the write operation to the EEP-ROM 4 need not use the flag generated from the write control unit 7 or the interrupt request as in the embodiment described above. For example it is possible to employ a circuit construction in which a suitable work register in the CPU 1 is operated simultaneously with the start of the write operation to the EEP-ROM and is used as a kind of counter or timer which is updated at predetermined periods during its operation, and the return operation is executed when the content of such a work register reaches a predetermined value. In other words, it is possible to use a construction wherein the CPU 1 counts a predicted and predetermined write time and checks, by means of software, the completion of the write operation to the EEP-ROM at the point of completion of counting of this time. In this case, the setting of the write time and the control of the subsequent return operation can be made by means of hardware using an exclusive circuit such as a timer circuit.

The user program in the embodiment described above may have a construction wherein the CPU 1 is stopped by external control and the write operation occurs directly to the user program region M1 of EEP-ROM 4 from outside the microcomputer.

This write operation of the user program may be effected by a construction in which the CPU 1 receives a program from the outside through the I/O unit 5 in accordance with the program of mask ROM 3 and then writes that program in the user program region M1 of the EEP-ROM 4. Since this example does not have means for making direct access to the built-in EEP-ROM 4 from the outside, the function of keeping secrecy can be improved and the suitability of the microcomputer for a single chip type microcomputer to be incorporated in an IC card can be further improved.

In this case, a flag within the EEP-ROM 4 may be used to judge whether or not the write operation to the user program 4 has already been made. The start address after the reset of the CPU 1 can also be changed in accordance with the status of this flag.

The writable ROM used in the present invention may be an electrically writable and erasable ROM such as an EEP-ROM, but may alternatively be an EP-ROM that can be erased by ultraviolet rays.

In the embodiment described above, the write operation is made by the write control circuit 7 for a predetermined period, though the present invention is not limited to this.

The write time in EP-ROMs in general is longer than in EEP-ROMs. Accordingly, if the write time is constant as in the embodiment described above, the response time will increase when the microcomputer is incorporated in the IC card. In this case, an unnecessary long write time may occur because the write time is set in consideration of the worst case due to process variance of EP-ROM devices.

Therefore, the inventor of the present invention has devised a construction wherein the CPU 1 can invoke and further stop the write control circuit 7. In other words, a flag PGM is provided inside the write control circuit 7 and when the CPU 1 sets this flag PGM, the write operation is started and when the CPU 1 resets the flag PGM, the write operation is stopped (completed). The write time may be counted by suitable software, for example, or by a timer circuit if the microcomputer has a built-in timer.

Fig. 9 shows an example of a flowchart of the write control program to be stored in mask ROM 3 in the case described above.

First of all, the CPU 1 sets the write address data for the EEP-ROM and the EEP-ROM latches the address data (step S1). Next, the CPU 1 clears the content of a specific register N (step S2), add +1 to the register N (step S3) and then sets the flag PGM (step 4). A predetermined unit time such as 1 ms is counted (step S5) and then the flag PGM is reset (step 6) and the write operation for the unit time is complete.

Thereafter, a judgement is made to determine whether or not the write operation is made correctly (step S7). This judgement is made by reading the EEP-ROM and comparing the content thus read out with the write data. Though the invention is not limited to this, the latched data may be prevented from destruction at the time of read-out. If the result of comparison turns to be NO (inconformity), the CPU 1 judges the value of the register N (step S) and if the value is below 24, the CPU 1 returns to the step S3 and re-executes the write operation for the unit time. When the write operation for the unit time has been made 25 times (i.e. N = 25) and if the result still remains in non-conformity, the operation is judged to be a "failure" (step S12) and the flow is finished.

If the result of judgement is YES (conformity), the CPU 1 sets the flag PGM (step S8) and after counting 3xN ms (step S9), it clears the flag PGM (step S10) to finish the flow. In other words, a superposed write operation is made for the time which is three times the time N ms required to obtain the result YES.

Accordingly, the write operation can be made reliably at a high speed in conformity with the device characteristics and the write time as well as the response time can be shortened.

In accordance with the method described above, it becomes possible to reduce the size of the hardware, to improve the utilization efficiency of the hardware resources and to shorten the response time while satisfying various user requirements and keeping also the advantage that the data Dx may be stored semi-permanently in EEP-ROM, whenever necessary.

Among the effects brought forth by the present invention, the following will illustrate typical examples.

In a microcomputer with a built-in EEP-ROM, the user program region and the data region are in one EEP-ROM and their sizes can be selected in arbitrary proportions.

When the present invention is applied to a single chip type microcomputer to be incorporated in an IC card, the strength of the IC card can be improved due to the reduction of the size of the semiconductor chip.

Although the present invention has thus been described with reference to embodiments thereof, the invention is not limited thereto but can be changed or modified in various ways. For example, when the write control program is stored in advance in mask ROM 3 or EEP-ROM 4 and when the write operation to EEP-ROM 4 is made, the write control program may be transferred to RAM 2 in order to permit the CPU 1 to execute it.

Although the description given above illustrates examples wherein the present invention is applied to a single chip type microcomputer for an IC card, the present invention is not limited thereto but can also be applied to a board type microcomputer.

In other words, the present invention can be applied to microcomputers of the type wherein the program and the data are stored in an EEP-ROM.

## Claims

1. A single chip microcomputer (10) comprising:
a central processing unit (CPU) (1);
one or more external terminals (EXT I/O);
an input/output circuit (5) for transmitting data between the external terminals (EXT I/O) and the central processing unit (1);
a random access memory (2) defining a working region for the central processing unit (1);
an electrically programmable read-only memory (EPROM) (4) storing both a user program and data independent of the user program;
a Mask ROM further memory (3) for storing a write control program; and
a write control means (7) controlled by the central processing unit (1) on the basis of the write control program;
characterised in that:
the address positions of the electrically programmable read-only memory (4) and the further memory (3) in the address space of the control processing unit (1) are mutually different; and
in that the microcomputer has:
a) a first operating state in which at least the user program received at the external terminal(s) is storable in and/or retrievable from the electrically programmable read-only memory (4), said user program passing directly from the central processing unit (1) to the electrically programmable read-only memory (4);
b) a second operating state in which the user program in the electrically programmable read-only memory (4) is operable to cause the central processing unit (1) to generate new data; and
c) a third operating state in which that new data is stored in the electrically programmable read-only memory (4) by the write control means (7) under control of the write control program in the further memory (3), the central processing unit (1) being isolated from the electrically programmable read-only memory (4) in the third operating state.

2. A microcomputer according to claim 1, wherein the further memory (3) further stores a division program and the electrically programmable read-only memory (4) is divided into a user program region in which the user program is to be stored and a data region in which the data is to be stored which is independent from the user program region; the address positions of the two regions in the address space of the central processing unit (1) are mutually different and the proportion of the size of each region can be arbitrarily selected by the central processing unit (1).

3. A microcomputer according to claim 1 or claim 2, wherein the CPU (1) starts operation of the write control means in response to execution of the write control program when the CPU (1) executes a call instruction which is in the user program and indicates that operation of the CPU (1) is changed to the execution of the write control program from execution of the user program.

4. A microcomputer according to claim 3, wherein the write control program includes a return instruction which indicates that the operation of the CPU (1) is changed to the execution of the user program from the execution of the write control program, and wherein the return instruction is executed by the CPU (1) in response to completion of writing of the data from the CPU (1) into the EPROM (4).

5. A microcomputer according to any one of the preceding claims, wherein the EPROM (4) is an electrically erasable and programmable read-only memory (EEPROM).

6. A microcomputer according to any one of the preceding claims, further comprising:
internal bus means for coupling the CPU (1) to the EPROM (4), the input/output circuit (5), the further memory (3), the random access memory (2) and the write control means (7), respectively.

7. A microcomputer according to any one of the preceding claims wherein the EPROM (4) is coupled to the external terminals via the input/output circuit (5) when the externally generated input data forming the user program is written into the EPROM during the first operating state of the microcomputer.

8. A microcomputer according to any one of claims 1 to 6, wherein the EPROM (4) is coupled to the external terminals via the CPU (1) and the input/output circuit (5) when the externally generated input data constructing the user program is written into the EPROM (4) by the CPU (1) during the first operating state of the microcomputer.

9. An IC card having a single-chip microcomputer according to any one of claims 1 to 8.

10. A method of operation of a single-chip microcomputer, the single-chip microcomputer including an electrically programmable read-only memory (EPROM) (4) storing a user program therein, a central processing unit (CPU) (1) coupled to the EPROM (4), a mask ROM (3) coupled to the CPU (1) and storing a write control program, and a write control circuit (7) coupled to the CPU (1) and to the EPROM (4), the method involving writing data generated by the CPU (1) during the execution of the user program to the EPROM (4) by the steps of:
a) executing the user program by the CPU (1);
b) changing operation of the CPU (1) to the execution of the write control program from the execution of the user program when the CPU (1) judges that data produced by executing the user program is to be preserved into the EPROM (4);
c) starting operation of the write control circuit (7) by executing the write control program by the CPU (1);
d) writing the data to be preserved into the EPROM (4) by the write control circuit so that the data to be preserved is written at an address in the EPROM (4) different from that at which the user program is stored;
e) indicating completion of the writing step to the CPU (1);
f) changing the operation of the CPU (1) to the execution of the user program from the execution of the write control program, in response to the indication in the completion indicating step.

11. A method according to claim 10 wherein, in the executing step (a), the CPU (1) generates an address signal indicating to the EPROM (4) the address at which the data to be preserved is written, and the EPROM (4) latches the address signal and stores the data to be preserved at that address.

12. A method according to claim 10 or 11, wherein the operation of the CPU (1) is changed from the execution of the user program to the execution of the write control program when the CPU (1) executes a call instruction in the user program.

13. A method according to claim 12, wherein the operation of the CPU (1) is changed back to the execution of the user program when the CPU (1) executes a return instruction in the write control programs.

## Patentansprüche

1. Ein-Chip-Mikrocomputer (10) mit:
- einer zentralen Verarbeitungseinheit (CPU) (1);
- einem externen Anschluß (EXT E/A) oder mehreren;
- einem Eingangs/Ausgangs-Schaltkreis (5) zum Übertragen von Daten zwischen den externen Anschlüssen (EXT E/A) und der zentralen Verarbeitungseinheit (1);
- einem Direktzugriffsspeicher (2), der einen Arbeitsbereich für die zentrale Verarbeitungseinheit (1) bestimmt;
- einem elektrisch programmierbaren Festwertspeicher (EPROM) (4), der sowohl ein Anwenderprogramm als auch vom Anwenderprogramm unabhängige Daten speichert;
- einem weiteren Speicher (Masken-ROM) (3) zum Abspeichern eines Schreibsteuerprogramms; und
- einer Schreibsteuereinrichtung (7), die von der zentralen Verarbeitungseinheit (1) auf Grundlage des Schreibsteuerprogramms gesteuert wird;
**dadurch gekennzeichnet,** daß:
- die Adreßpositionen des elektrisch programmierbaren Festwertspeichers (4) und des weiteren Speichers (3) im Adreßraum der zentralen Verarbeitungseinheit (1) voneinander unabhängig sind; und
- der Mikrocomputer über folgendes verfügt:
a) einen ersten Funktionszustand, in dem zumindest das vom externen Anschluß (den externen Anschlüssen) empfangene Anwenderprogramm im elektrisch programmierbaren Festwertspeicher (4) abspeicherbar und/oder aus diesem abrufbar ist, wobei das Anwenderprogramm direkt von der zentralen Verarbeitungseinheit (1) zum elektrisch programmierbaren Festwertspeicher (4) durchläuft;
b) einen zweiten Funktionszustand, in dem das Anwenderprogramm im elektrisch programmierbaren Festwertspeicher (4) betreibbar ist, um zu bewirken, daß die zentrale Verarbeitungseinheit (1) neue Daten erzeugt; und
c) einen dritten Funktionszustand, in dem, damit neue Daten gesteuert durch das Schreibsteuerprogramm im weiteren Speicher (3) im elektrisch programmierbaren Festwertspeicher (4) durch die Schreibsteuereinrichtung (7) abgespeichert werden, die zentrale Verarbeitungseinheit (1) im dritten Funktionszustand vom elektrisch programmierbaren Festwertspeicher (4) abgetrennt wird.

2. Mikrocomputer nach Anspruch 1, bei dem der weitere Speicher (3) ferner ein Unterteilungsprogramm speichert, und der elektrisch programmierbare Festwertspeicher (4) in einen Anwenderprogrammbereich, in dem das Anwenderprogramm abzuspeichern ist, und einen Datenbereich unterteilt ist, in dem die Daten abzuspeichern sind, unabhängig vom Anwenderprogrammbereich; die Adreßpositionen der zwei Bereiche im Adreßraum der zentralen Verarbeitungseinheit (1) voneinander verschieden sind und der Anteil der Größe jedes Bereichs von der zentralen Verarbeitungseinheit (1) beliebig gewählt werden kann.

3. Mikrocomputer nach Anspruch 1 oder Anspruch 2, bei dem die CPU (1) den Betrieb der Schreibsteuereinrichtung auf die Ausführung des Schreibsteuerprogramms hin startet, wenn die CPU (1) eine im Anwenderprogramm vorhandene Aufrufanweisung abarbeitet, die anzeigt, daß der Betrieb der CPU (1) von der Ausführung des Anwenderprogramms auf die Ausführung des Schreibsteuerprogramms umzuwechseln ist.

4. Mikrocomputer nach Anspruch 3, bei dem das Schreibsteuerprogramm eine Rückkehranweisung enthält, die anzeigt, daß der Betrieb der CPU (1) von der Ausführung des Schreibsteuerprogramms auf die Ausführung des Anwenderprogramms umzuwechseln ist, und bei dem die Rückkehranweisung auf den Abschluß des Einschreibens der Daten von der CPU (1) in den EPROM (4) von der CPU (1) ausgeführt wird.

5. Mikrocomputer nach einem der vorstehenden Ansprüche, bei dem der EPROM (4) ein elektrisch löschbarer und programmierbarer Festwertspeicher (EEPROM) ist.

6. Mikrocomputer nach einem der vorstehenden Ansprüche, der ferner folgendes aufweist:
- eine interne Buseinrichtung zum Verbinden der CPU (1) mit dem EPROM (4), dem Eingangs/Ausgangs-Schaltkreis (5), dem weiteren Speicher (3), dem Direktzugriffsspeicher (2) bzw. der Schreibsteuereinrichtung (7).

7. Mikrocomputer nach einem der vorstehenden Ansprüche, bei dem der EPROM (4) über den Eingangs/Ausgangs-Schaltkreis (5) mit den externen Anschlüssen verbunden wird, wenn extern erzeugte Eingangsdaten, die das Anwenderprogramm bilden, während des ersten Funktionszustands des Mikrocomputers in den EPROM eingeschrieben werden.

8. Mikrocomputer nach einem der Ansprüche 1 bis 6, bei dem der EPROM (4) über die CPU (1) und den Eingangs/Ausgangs-Schaltkreis (5) mit den externen Anschlüssen verbunden wird, wenn extern erzeugte Eingangsdaten, die das Anwenderprogramm bilden, während des ersten Funktionszustands des Mikrocomputers durch die CPU (1) in den EPROM (4) eingeschrieben werden.

9. IC-Karte mit einem Ein-Chip-Mikrocomputer nach einem der Ansprüche 1 bis 8.

10. Verfahren zum Betreiben eines Ein-Chip-Mikrocomputers, der einen ein Anwenderprogramm abspeichernden elektrisch programmierbaren Festwertspeicher (EPROM) (4), eine mit dem EPROM (4) verbundene zentrale Verarbeitungseinheit (CPU) (1), einen mit der CPU (1) verbundenen und ein Schreibsteuerprogramm abspeichernden Masken-ROM (3) und eine mit der CPU (1) und dem EPROM (4) verbundene Schreibsteuerschaltung (7) beinhaltet, bei dem von der CPU (1) während der Ausführung des Anwenderprogramms erzeugte Daten in den EPROM (4) geschrieben werden, mit den folgenden Schritten:
a) Ausführen des Anwenderprogramms durch die CPU (1);
b) Umwechseln der Funktion der CPU (1) auf die Ausführung des Schreibsteuerprogramms ausgehend von der Ausführung des Anwenderprogramms, wenn die CPU (1) entscheidet, daß die durch Ausführen des Anwenderprogramms erzeugten Daten im EPROM (4) aufzubewahren sind;
c) Starten der Funktion der Schreibsteuerschaltung (7) durch Ausführen des Schreibsteuerprogramms durch die CPU (1);
d) Einschreiben der aufzubewahrenden Daten in den EPROM (4) durch die Schreibsteuerschaltung in solcher Weise, daß die aufzubewahrenden Daten unter einer Adresse in den EPROM (4) geschrieben werden, die sich von einer unterscheidet, unter der das Anwenderprogramm abgespeichert ist;
e) Anzeigen des Abschlusses des Schreibschritts an die CPU (1); und
f) Umwechseln der Funktion der CPU (1) von der Ausführung des Schreibsteuerprogramms auf die Ausführung des Anwenderprogramms auf die Anzeige in dem den Abschluß anzeigenden Schritt hin.

11. Verfahren nach Anspruch 10, bei dem, bei der Ausführung des Schritts a), die CPU (1) ein Adreßsignal erzeugt, das dem EPROM (4) die Adresse anzeigt, unter der die aufzubewahrenden Daten einzuschreiben sind, und der EPROM (4) das Adreßsignal festhält und die aufzubewahrenden Daten unter dieser Adresse abspeichert.

12. Verfahren nach Anspruch 10 oder Anspruch 11, bei dem die Funktion der CPU (1) von der Ausführung des Anwenderprogramms auf die Ausführung des Schreibsteuerprogramms umgeschaltet wird, wenn die CPU (1) eine Aufrufverarbeitung im Anwenderprogramm ausführt.

13. Verfahren nach Anspruch 12, bei dem die Funktion der CPU (1) auf die Ausführung des Anwenderprogramms zurückgeschaltet wird, wenn die CPU (1) eine Rückkehranweisung im Schreibsteuerprogramm ausführt.

## Revendications

1. Micro-ordinateur monopuce (10) comprenant :
une unité centrale de traitement (CPU) (1);
un ou plusieurs terminaux extérieurs (EXT I/O);
un circuit d'entrée/sortie (5) pour transmettre des données entre les terminaux extérieurs (EXT I/O) et l'unité centrale de traitement (1);
une mémoire à accès direct (2) définissant une zone de travail pour l'unité centrale de traitement (1);
une mémoire morte électriquement programmable (EPROM) (4) mémorisant à la fois un programme d'utilisateur et des données indépendantes du programme d'utilisateur;
une autre mémoire ROM à masque (3) pour mémoriser un programme de commande d'enregistrement; et
des moyens de commande d'enregistrement (7) commandés par l'unité centrale de traitement (1) sur la base du programme de commande d'enregistrement;
caractérisé en ce que :
les positions d'adresses de la mémoire morte électriquement programmable (4) et de l'autre mémoire (3) dans l'espace adresses de l'unité centrale de traitement sont différentes les unes des autres; et
en ce que le micro-ordinateur comporte :
(a) un premier état de fonctionnement, dans lequel au moins le programme d'utilisateur reçu dans le ou les terminaux extérieurs peut être mémorisé et/ou extrait dans ou à partir de la mémoire morte électriquement programmable (4), ledit programme d'utilisateur étant transmis directement de l'unité centrale de traitement (1) à la mémoire morte électriquement programmable (4);
(b) un second état de fonctionnement, dans lequel le programme d'utilisateur situé dans la mémoire morte électriquement programmable (4) peut être activé de manière à amener l'unité centrale de traitement (1) à produire de nouvelles données; et
(c) un troisième état de fonctionnement, dans lequel de nouvelles données sont mémorisées dans la mémoire morte électriquement programmable (4) par les moyens de commande d'enregistrement (7) sous la commande du programme de commande d'enregistrement dans l'autre mémoire (3), l'unité centrale de traitement (1) étant isolée par rapport à la mémoire morte électriquement programmable (4) dans le troisième état de fonctionnement.

2. Micro-ordinateur selon la revendication 1, dans lequel l'autre mémoire (3) mémorise en outre un programme de division, et la mémoire morte électriquement programmable (4) est divisée en une zone de programme d'utilisateur, dans laquelle le programme d'utilisateur doit être mémorisé, et une zone de données, dans laquelle les données doivent être mémorisées, et qui est indépendante de la zone du programme d'utilisateur; les positions des adresses des deux zones dans l'espace adresses de l'unité centrale de traitement (1) sont différentes les unes des autres et la proportion de la taille de chaque région peut être arbitrairement choisie par l'unité centrale de traitement (1).

3. Micro-ordinateur selon la revendication 1 ou 2, dans lequel l'unité CPU (1) commence à actionner les moyens de commande d'enregistrement en réponse à l'exécution du programme de commande d'enregistrement lorsque l'unité CPU (1) exécute une instruction d'appel qui est dans le programme d'utilisateur et indique que l'opération de l'unité CPU (1) est commutée sur l'exécution du programme de commande d'enregistrement à partir de l'exécution du programme d'utilisateur.

4. Micro-ordinateur selon la revendication 3, dans lequel le programme de commande d'enregistrement comprend une instruction de retour, qui indique que l'opération de l'unité CPU (1) est commutée depuis l'exécution du programme de commande d'enregistrement sur l'exécution du programme d'utilisateur, et dans lequel l'instruction de retour est exécutée par l'unité CPU (1) en réponse a l'achèvement de l'enregistrement des données depuis l'unité CPU (1) dans la mémoire EPROM (4).

5. Micro-ordinateur selon l'une quelconque des revendications précédentes, dans lequel la mémoire EPROM (4) est une mémoire morte électriquement effaçable et programmable (EEPROM).

6. Micro-ordinateur selon l'une quelconque des revendications précédentes, comportant en outre :
des moyens formant bus interne pour l'accouplement de l'unité CPU (1) respectivement à la mémoire EPROM (4), au circuit d'entrée/sortie (5), à l'autre mémoire (3), à la mémoire à accès direct (2) et aux moyens de commande d'enregistrement (7).

7. Micro-ordinateur selon l'une quelconque des revendications précédentes, dans lequel la mémoire EPROM (4) est accouplée aux terminaux extérieurs par l'intermédiaire du circuit d'entrée/sortie (5) lorsque les données d'entrée produites de façon externe et formant le programme d'utilisateur sont enregistrées dans la mémoire EPROM pendant le premier état de fonctionnement du micro-ordinateur.

8. Micro-ordinateur selon l'une quelconque des revendications 1 à 6, dans lequel la mémoire EPROM (4) est accouplée aux terminaux extérieurs par l'intermédiaire de l'unité CPU (1) et du circuit d'entrée/sortie (5), lorsque les données d'entrée, produites extérieurement et constituant le programme d'utilisateur, sont enregistrées dans la mémoire EPROM (4) au moyen de l'unité CPU (1) pendant le premier état de fonctionnement du micro-ordinateur.

9. Carte à circuits imprimés possédant un micro-ordinateur monopuce selon l'une quelconque des revendications 1 à 8.

10. Procédé pour faire fonctionner un micro-ordinateur monopuce, ce dernier comprenant une mémoire morte électriquement programmable (EPROM) (4) mémorisant un programme d'utilisateur, une unité centrale de traitement (CPU) (1) accouplée à la mémoire EPROM (4), une mémoire ROM à masque (3) accouplée à l'unité CPU (1) et mémorisant un programme de commande d'enregistrement, un circuit de commande d'enregistrement (7) accouplé à l'unité CPU (1) et à la mémoire EPROM (4), ce procédé mettant en jeu l'enregistrement de données produites par l'unité CPU (1) pendant l'exécution du programme d'utilisateur, dans la mémoire EPROM (4), au moyen des étapes suivantes :
a) exécution du programme d'utilisateur par l'unité CPU (1);
b) commutation du fonctionnement de l'unité CPU (1) de l'exécution du programme d'utilisateur à l'exécution du programme de commande d'enregistrement lorsque l'unité CPU (1) évalue que les données produites par l'exécution du programme d'utilisateur doivent être conservées dans la mémoire EPROM (4);
c) déclenchement du fonctionnement du circuit de commande d'enregistrement (7) au moyen de l'exécution du programme d'enregistrement par l'unité CPU (1);
d) enregistrement des données devant être conservées dans la mémoire EPROM (4) par le circuit de commande d'enregistrement de telle sorte que les données devant être conservées sont enregistrées à une adresse dans la mémoire EPROM (4), qui diffère de celle à laquelle le programme d'utilisateur est mémorisé;
e) indication de l'achèvement de l'étape d'enregistrement à l'unité CPU (1);
f) commutation du fonctionnement de l'unité CPU (1), de l'exécution du programme de commande d'enregistrement à l'exécution du programme d'utilisateur, en réponse a l'indication donnée lors de l'étape d'indication d'achèvement.

11. Procédé selon la revendication 10, selon lequel, lors de l'étape d'exécution (a), l'unité CPU (1) produit un signal d'adresse indiquant à la mémoire EPROM (4) l'adresse à laquelle les données devant être conservées sont enregistrées, et la mémoire EPROM (4) verrouille le signal d'adresse et mémorise les données devant être conservées à cette adresse.

12. Procédé selon la revendication 10 ou 11, selon lequel le fonctionnement de l'unité CPU (1) est commuté de l'exécution du programme d'utilisateur à l'exécution du programme d'enregistrement lorsque l'unité CPU (1) exécute une instruction d'appel dans le programme d'utilisateur.

13. Procédé selon la revendication 12, selon lequel le fonctionnement de l'unité CPU (1) est ramené à l'exécution du programme d'utilisateur lorsque l'unité CPU (1) exécute une instruction de retour dans les programmes de commande d'enregistrement.
